(19) Europäisches Patentamt
European Patent Office
Office européen des brevets

(11) **EP 4 429 152 A1**

(12) **EUROPEAN PATENT APPLICATION**
published in accordance with Art. 153(4) EPC

(43) Date of publication:
**11.09.2024 Bulletin 2024/37**

(21) Application number: **22889352.5**

(22) Date of filing: **03.11.2022**

(51) International Patent Classification (IPC):
*H04L 5/00* (2006.01)   *H04W 72/04* (2023.01)

(52) Cooperative Patent Classification (CPC):
**H04B 1/713; H04L 5/00; H04W 72/04**

(86) International application number:
**PCT/CN2022/129472**

(87) International publication number:
**WO 2023/078330 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 CN 202111306433**

(71) Applicant: **Vivo Mobile Communication Co., Ltd. Dongguan, Guangdong 523863 (CN)**

(72) Inventors:
• **WANG, Lihui**
  **Dongguan, Guangdong 523863 (CN)**
• **PAN, Xueming**
  **Dongguan, Guangdong 523863 (CN)**

(74) Representative: **Lavoix**
**Bayerstraße 83**
**80335 München (DE)**

(54) **INFORMATION DETERMINATION METHOD AND DEVICE, TERMINAL, AND READABLE STORAGE MEDIUM**

(57) This application discloses an information determining method and apparatus, a terminal, and a readable storage medium, and pertains to the field of communications technologies. The information determining method in the embodiments of this application includes: determining, by a terminal, a PUCCH resource configured for the terminal on a first initial uplink BWP, and determining a PRB index of the PUCCH resource based on a first PRB offset in a case that frequency hopping of the PUCCH resource is disabled.

A terminal determines a PUCCH resource configured for the terminal on a first initial uplink BWP ⟩ 21

The terminal determines a PRB index of the PUCCH resource based on a first PRB offset in a case that frequency hopping of the PUCCH resource is disabled ⟩ 22

FIG. 2

**Description**

**CROSS-REFERENCE TO RELATED APPLICATIONS**

This application claims priority to Chinese Patent Application No. 202111306433.6, filed in China on November 05, 2021, which is incorporated herein by reference in its entirety.

**TECHNICAL FIELD**

This application pertains to the field of communications technologies, and specifically relates to an information determining method and apparatus, a terminal, and a readable storage medium.

**BACKGROUND**

Currently, if a network-side device has configured an initial uplink bandwidth part (Bandwidth Part, BWP) for a terminal and has configured a common physical uplink control channel (Physical Uplink Control Channel, PUCCH) resource on the initial uplink BWP for an initial access/random access procedure of the terminal, typically, frequency hopping of the PUCCH resource is enabled, and a physical resource block (Physical Resource Block, PRB) index of a first hop/second hop of the PUCCH resource is determined. However, in a case that frequency hopping of the PUCCH resource is disabled, it is currently unclear how to determine the PRB index of the PUCCH resource.

**SUMMARY**

Embodiments of this application provide an information determining method and apparatus, a terminal, and a readable storage medium, so as to solve the problem of how to determine a PRB index of a PUCCH resource configured for the terminal in a case that frequency hopping of the PUCCH resource is disabled.

According to a first aspect, an information determining method is provided and includes:

determining, by a terminal, a PUCCH resource configured for the terminal on a first initial uplink BWP; and
determining, by the terminal, a PRB index of the PUCCH resource based on a first PRB offset in a case that frequency hopping of the PUCCH resource is disabled.

According to a second aspect, an information determining apparatus is provided and includes:

a first determining module configured to determine a PUCCH resource configured for the terminal on a first initial uplink BWP; and
a second determining module configured to determine a PRB index of the PUCCH resource based on a first PRB offset in a case that frequency hopping of the PUCCH resource is disabled.

According to a third aspect, a terminal is provided, where the terminal includes a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communications interface, where the processor is configured to determine a PUCCH resource configured for the terminal on a first initial uplink BWP and determine a PRB index of the PUCCH resource based on a first PRB offset in a case that frequency hopping of the PUCCH resource is disabled.

According to a fifth aspect, a readable storage medium is provided, where the readable storage medium has stored a program or instructions thereon, and when the program or instructions are executed by a processor, the steps of the method according to the first aspect are implemented.

According to a sixth aspect, a chip is provided, where the chip includes a processor and a communications interface, the communications interface is coupled to the processor, and the processor is configured to run a program or instructions to implement the steps of the method according to the first aspect.

According to a seventh aspect, a computer program/program product is provided, where the computer program/program product is stored in a non-transient storage medium, and the program/program product is executed by at least one processor to implement the steps of the method according to the first aspect.

According to an eighth aspect, a communications device is provided and configured to implement the steps of the method according to the first aspect.

In the embodiments of this application, after determining a PUCCH resource configured for the terminal on a first initial uplink BWP, the terminal can determine a PRB index of the PUCCH resource based on a first PRB offset in a case that frequency hopping of the PUCCH resource is disabled. Therefore, the terminal can successfully determine the PRB index of the PUCCH resource with frequency hopping disabled during an initial access procedure, thereby smoothly executing the access procedure.

## BRIEF DESCRIPTION OF DRAWINGS

FIG. 1 is a block diagram of a wireless communications system to which embodiments of this application are applicable;
FIG. 2 is a flowchart of an information determining method according to an embodiment of this application;
FIG. 3 is a first schematic diagram of resource configuration according to an embodiment of this application;
FIG. 4 is a second schematic diagram of resource configuration according to an embodiment of this application;
FIG. 5 is a schematic structural diagram of an information determining apparatus according to an embodiment of this application;
FIG. 6 is a first schematic structural diagram of a terminal according to an embodiment of this application; and
FIG. 7 is a second schematic structural diagram of a terminal according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It is worth noting that the technology described in the embodiments of this application is not limited to long term evolution (Long Term Evolution, LTE)/LTE-Advanced (LTE-Advanced, LTE-A) systems, but may also be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

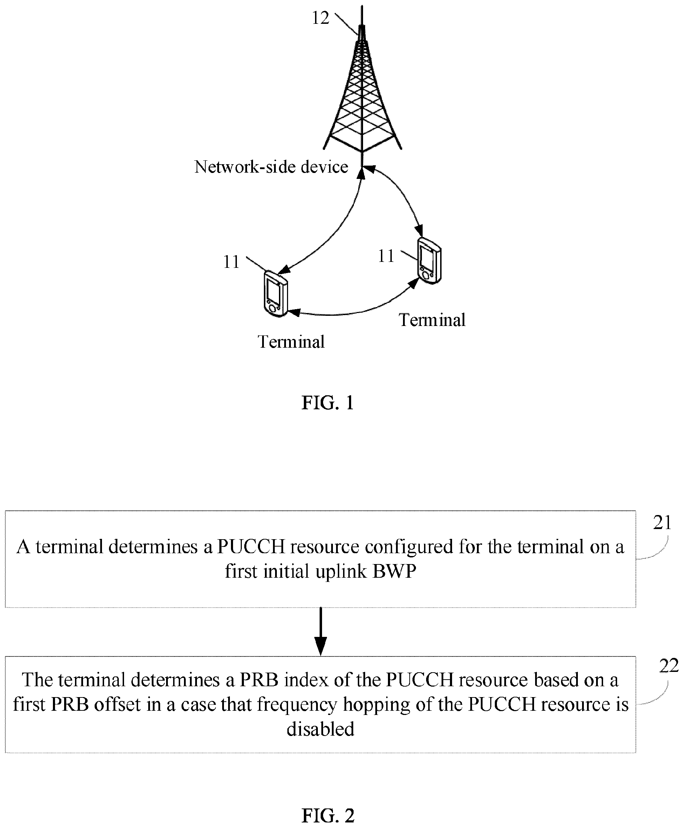

FIG. 1 is a block diagram of a wireless communications system to which embodiments of this application are applicable. The wireless communications system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer, TPC), a laptop computer (Laptop Computer, LC) also referred to as a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (virtual reality, VR) device, a robot, a wearable device (Wearable Device, WD), a vehicle user equipment (Vehicle User Equipment, VUE), a pedestrian user equipment (Pedestrian User Equipment, PUE), or smart home (home appliances or furniture with wireless communications functions, such as refrigerators, televisions, washing machines, or furniture). The wearable device includes a smart watch, a smart band, a smart headset, smart glasses, smart jewelry (smart bangle, smart bracelet, smart ring, smart necklace, smart anklet, smart ankle bracelet, and the like), a smart wristband, smart clothing, a gaming console, and the like. It should be noted that a specific type of the terminal 11 is not limited in this embodiment of this application. The network-side device 12 may be a base station or a core network, where the base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a wireless fidelity (Wireless Fidelity, WiFi) node, a transmit/receive point (Transmit/Receive Point, TRP), or another appropriate term in the art. As long as the same technical effects are achieved, the base station is not limited to a specific technical term. It should be noted that the base station in the NR system is merely used as an example in the embodiments of this application, but a specific type of the base station is not limited.

For ease of understanding of the embodiments of this application, the following content is first described.

A reduced capability (Reduced Capability, RedCap) terminal can be abbreviated as a RedCap device/UE or RedCap/redcap. In response to the demands of vertical industries, in scenarios of using industrial wireless sensors, video surveillance, and/or wearable devices, or the like, terminals are required to have reduced complexity in various aspects including numbers of receive/transmit antennas, bandwidth supported, time and capability for terminal data and signal processing, and the like. Such terminals are referred to as reduced capability terminals. In terms of bandwidth, a conventional/old/regular terminal is required to support 100 MHz in frequency range (Frequency Range, FR) 1 and 200 MHz in FR2, while redcap UE can support a maximum bandwidth capacity of 20 MHz in FR1 and 100 MHz in FR2. When redcap UE and conventional/old/regular terminals coexist in a same network, to reduce the impact on the conventional/old/regular terminal, if a bandwidth size of an initial bandwidth part (initial Bandwidth Part, initial BWP) exceeds the maximum bandwidth capability of the redcap UE or if there are too many redcap UEs, an additional or separate (additional/separate) initial downlink (Downlink, DL)/uplink (Uplink, UL) BWP can be configured for the redcap UEs to avoid congestion in the initial BWP.

For redcap (reduced capability) UE, as its supported bandwidth is less than or equal to the bandwidth capability of regular UE, the bandwidth of the initial BWP configured by the network for the conventional/old/regular UE may exceed the maximum bandwidth capability of the redcap UE. Therefore, the network can configure an additional or separate initial BWP for the redcap UE, ensuring that the bandwidth of this initial BWP falls within the capability of the redcap UE. In addition, as compared to the regular UE, the redcap UE has reduced other capabilities. Therefore, even though the bandwidth of the initial BWP configured by the network for the regular UE falls within the capability of the redcap UE, the network can configure an additional or separate initial BWP for the redcap UE in order to not impact the performance of the regular UE or to allow the network to adopt different scheduling strategies for the regular UE and the redcap UE.

To avoid fragmentation of uplink transmission resources for the conventional/old/regular UE, a separate initial UL BWP configured for the RedCap UE can be placed near the carrier edge, and PUCCH frequency hopping can be disabled/closed/deactivated. In other words, for the RedCap UE, PUCCH frequency hopping can be disabled/closed/deactivated in the separate initial UL BWP during random access/initial access procedure to avoid fragmentation of the uplink resources.

In the embodiments of this application, the terminal may also be referred to as a device, UE, or the like. A regular device may also be referred to as non-RedCap UE. The terms "separate", "independent", and "additional" have the same meaning and can be used interchangeably.

In the embodiments of this application, a common PUCCH resource set can also be referred to as a PUCCH common resource set, and the two can be used interchangeably.

The following describes in detail an information determining method and apparatus, a terminal, and a readable storage medium provided in the embodiments of this application by using some embodiments and application scenarios thereof with reference to the accompanying drawings.

Refer to FIG. 2. FIG. 2 is a flowchart of an information determining method according to an embodiment of this application. The method may be executed by a terminal. As shown in FIG. 2, the method includes the following steps.

Step 21. A terminal determines a PUCCH resource configured for the terminal on a first initial uplink BWP.

In this embodiment, the terminal is optionally a reduced capability RedCap terminal, and the first initial uplink BWP is a separate initial UL BWP configured for the RedCap terminal.

Step 22. The terminal determines a PRB index of the PUCCH resource based on a first PRB offset in a case that frequency hopping of the PUCCH resource is disabled.

The PRB index of the PUCCH resource can be understood as an index of a PRB on which the PUCCH resource is located.

In some embodiments, the frequency hopping being disabled in this step 22 may means that when a network-side device has not configured a specific PUCCH resource for the terminal (in other words, if a UE does not have dedicated PUCCH resource configuration, provided by PUCCH-ResourceSet in PUCCH-Config), but has configured a separate initial UL BWP for the terminal and has configured a common PUCCH resource in the separate initial UL BWP for hybrid automatic repeat request acknowledge (Hybrid Automatic Repeat request Acknowledge, HARQ-ACK) feedback of a random access message (for example, MSG4 or MSGB) during the initial access/random access procedure, frequency hopping is disabled/not enabled for the PUCCH resource.

In the information determining method in this embodiment of this application, after determining a PUCCH resource configured for the terminal on a first initial uplink BWP, the terminal can determine a PRB index of the PUCCH resource based on a first PRB offset in a case that frequency hopping of the PUCCH resource is disabled. Therefore, the terminal can successfully determine the PRB index of the PUCCH resource with frequency hopping disabled during an initial access/random procedure, thereby smoothly executing the access procedure.

Optionally, the first PRB offset may be defined as an offset relative to a starting position of the first initial uplink BWP or an offset relative to an ending position of the first initial uplink BWP.

Optionally, the first PRB offset being an offset relative to a starting position of the first initial uplink BWP may be configured by the network-side device or may be a default value. Alternatively, the first PRB offset being an offset relative to an ending position of the first initial uplink BWP may be configured by the network-side device or may be a default value.

Optionally, the first PRB offset may include (I) or (II).

(I) A PRB offset corresponding to a PUCCH resource set index indicated by the network-side device, where the PUCCH resource set index is used to indicate a common PUCCH resource set configured for the terminal.

In some embodiments, the PRB offset corresponding to a PUCCH resource set index indicated by the network-side device may be determined using the first table configured through higher-layer signaling. A row index in the first table is used to indicate the common PUCCH resource set configured for the terminal. The row index in the first table is an index of a PUCCH resource set indicated by the network through PUCCH resource common signaling, such as pucch-ResourceCommon. When the terminal is not configured with any dedicated PUCCH resource by the network, the terminal uses the foregoing common PUCCH resource set configured using the PUCCH resource common signaling.

For example, the first table can be as shown in Table 1 below:

**Table 1**

| Index | PUCCH format | First symbol | Number of symbols | PRB offset $RB_{\mathrm{BWP}}^{\mathrm{offset}}$ | $N_{\mathrm{CS}}$ |
|---|---|---|---|---|---|
| 0 | 0 | 12 | 2 | 0 | {0,3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{\mathrm{BWP}}^{\mathrm{size}}/4 \right\rfloor$ | {0, 3, 6, 9} |

In Table 1, $RB_{\mathbf{BWP}}^{\mathbf{offset}}$ represents the PRB offset, and $N_{\mathrm{CS}}$ represents a total number of initial cyclic shift indexes in a set of initial cyclic shift indexes for a corresponding row index.

A RedCap terminal configured with a separate initial UL BWP is used as an example, and for the PRB offset column in Table 1, the following three cases may exist:

case 1: the PRB offset is set relative to a starting position of the separate initial UL BWP by default;

case 2: the PRB offset is set relative to an ending position of the separate initial UL BWP by default; and

case 3: whether the PRB offset is set relative to a starting position of the separate initial UL BWP or an ending position of the separate initial UL BWP by default is configured by the network-side device.

The starting position of the separate initial UL BWP can be referred to as a lower PRB index or a PRB lower index. The ending position of the separate initial UL BWP can be referred to as a higher PRB index or a PRB higher index.

(II) A PRB offset configured by the network-side device through higher-layer signaling.

Due to the fact that PRB offsets corresponding to the PUCCH resource set indexes in the foregoing (I) are usually very limited, for example, the PRB offsets involved in the first table include only 0, 2, 3, and 4, the requirements of the first initial uplink BWP, such as the separate initial UL BWP, may not be met. Therefore, new higher-layer signaling can be introduced for configuration of the first PRB offset, so as to distinguish the first PRB offset from the PRB offsets corresponding to the PUCCH resource set indexes in the foregoing (I). For example, the PRB offset configured through higher-layer signaling in (II) may be denoted as a separate PRB offset.

Optionally, the PRB offset configured through higher-layer signaling in (II) may be an offset relative to a starting position of the first initial uplink BWP or an offset relative to an ending position of the first initial uplink BWP.

In some embodiments, if the network-side device has configured a PRB offset for the terminal, the terminal may ignore the PRB offset corresponding to the PUCCH resource set index, for example, ignoring the PRB offsets in the first table; or otherwise, if the network-side device has not configured any PRB offset for the terminal, the terminal uses a PRB offset corresponding to a PUCCH resource set index, for example, using a PRB offset in the first table.

In some embodiments, in an example in which a RedCap terminal has configured a separate initial UL BWP, the RedCap terminal can obtain a starting position and/or an ending position of the separate initial UL BWP and a size $N_{BWP}^{size}$ of the separate initial UL BWP based on configuration information of a system information block (System Information Block, SIB).

In the embodiments of this application, manners in which the terminal may determine a PRB index of a PUCCH resource for which frequency hopping is disabled include but are not limited to the following three manners.

(1) The PRB index of the PUCCH resource is $RB_{BWP}^{offset} + \lfloor r_{PUCCH}/N_{CS} \rfloor$; or the PRB index of the PUCCH resource is $N_{BWP}^{size} - 1 - RB_{BWP}^{offset} - \lfloor r_{PUCCH}/N_{CS} \rfloor$; where

$RB_{BWP}^{offset}$ represents a first PRB offset and may be determined based on the foregoing (I) or (II). $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; that is, $0 \le r_{PUCCH} \le 15$; $N_{CS}$ represents a total number of initial cyclic shift indexes in a set of initial cyclic shift indexes; and $\lfloor \rfloor$ represents a round down symbol.

(2) When $\lfloor r_{PUCCH}/8 \rfloor = 0$, the PRB index of the PUCCH resource is $RB_{BWP}^{offset} + \lfloor r_{PUCCH}/N_{CS} \rfloor$; or when $\lfloor r_{PUCCH}/8 \rfloor = 1$, the PRB index of the PUCCH resource is $RB_{BWP}^{offset} + X + \lfloor (r_{PUCCH} - 8)/N_{CS} \rfloor$; where $RB_{BWP}^{offset}$

represents a first PRB offset and may be determined based on the foregoing (I) or (II). $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; that is, $0 \le r_{PUCCH} \le 15$; $N_{CS}$ represents a total number of initial cyclic shift indexes in a set of initial cyclic shift indexes; X is greater than 0, X may represent a number of PRB offsets between PRB indexes in which last 8 PUCCH common resources are located, that is, $8 \le r_{PUCCH} \le 15$, and PRB indexes in which first 8 PUCCH common resources are located, that is, $0 \le r_{PUCCH} \le 7$; and $\lfloor \rfloor$ represents a round down symbol.

Optionally, X may be equal to $\lceil 8/N_{CS} \rceil$, representing a number of PRBs that eight PUCCH common resources need to occupy, and $\lceil \rceil$ represents a round up symbol. Alternatively, X may be a value configured by the network-side device, such as 1, which is not limited.

(3) When $\lfloor r_{PUCCH}/8 \rfloor = 0$, the PRB index of the PUCCH resource is

$$N_{BWP}^{size} - 1 - RB_{BWP}^{offset} - \lfloor r_{PUCCH}/N_{CS} \rfloor$$ ; or when $\lfloor r_{PUCCH}/8 \rfloor = 1$, the PRB index of the PUCCH resource is $$N_{BWP}^{size} + X - 1 - RB_{BWP}^{offset} - \lfloor r_{PUCCH}/N_{CS} \rfloor$$ ; where

$RB_{BWP}^{offset}$ represents a first PRB offset and may be determined based on the foregoing (I) or (II); $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; that is, $0 \le r_{PUCCH} \le 15$; $N_{CS}$ represents a total number of initial cyclic shift indexes in a set of initial cyclic shift indexes; X is greater than 0; and $\lfloor \rfloor$ represents a round down symbol.

Optionally, X may be equal to $\lceil 8/N_{CS} \rceil$, and $\lceil \rceil$ represents a round up symbol. Alternatively, X may be a value configured by the network-side device, such as 1, which is not limited.

In this embodiment of this application, if frequency hopping is enabled for the PUCCH resource configured for the terminal, the terminal can determine, based on a second PRB offset, a first PRB index of the PUCCH resource in a first hop and a second PRB index of the PUCCH resource in a second hop. When $\lfloor r_{PUCCH}/8 \rfloor = 0$, the first PRB index is $RB_{BWP}^{offset} + \lfloor r_{PUCCH}/N_{CS} \rfloor$, and the second PRB index is $N_{BWP}^{size} - 1 - RB_{BWP}^{offset} - \lfloor r_{PUCCH}/N_{CS} \rfloor$

. Alternatively, when $\lfloor r_{PUCCH}/8 \rfloor = 1$, the first PRB index is $N_{BWP}^{size} - 1 - RB_{BWP}^{offset} - \lfloor (r_{PUCCH} - 8)/N_{CS} \rfloor$

, and the second PRB index is $RB_{BWP}^{offset} + \lfloor (r_{PUCCH} - 8)/N_{CS} \rfloor$ ; $RB_{BWP}^{offset}$ represents the second PRB offset;

$N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; that is, $0 \le r_{PUCCH} \le 15$; and $N_{CS}$ represents a total number of initial cyclic shift indexes in a set of initial cyclic shift indexes; and $\lfloor \rfloor$ represents a round down symbol.

Optionally, the second PRB offset may be defined as an offset relative to a starting position of the first initial uplink BWP or an offset relative to an ending position of the first initial uplink BWP.

Optionally, the second PRB offset being an offset relative to a starting position of the first initial uplink BWP may be configured by the network-side device or may be a default value. Alternatively, the second PRB offset being an offset relative to an ending position of the first initial uplink BWP may be configured by the network-side device or may be a default value.

Optionally, the second PRB offset may include (I) or (II).

(I) A PRB offset corresponding to a PUCCH resource set index indicated by the network-side device, where the PUCCH resource set index is used to indicate a common PUCCH resource set configured for the terminal.

In some embodiments, the PRB offset corresponding to a PUCCH resource set index indicated by the network-side device may be determined using the first table configured through higher-layer signaling. A row index in the first table is used to indicate the common PUCCH resource set configured for the terminal. The row index in the first table is an index of a PUCCH resource set indicated by the network through PUCCH resource common signaling, such as pucch-ResourceCommon. When the terminal is not configured with any dedicated PUCCH resource by the network, the terminal uses the foregoing common PUCCH resource set configured using the PUCCH resource common signaling. For example, the first table can be as shown in Table 1 above.

A RedCap terminal configured with a separate initial UL BWP is used as an example, and for the PRB offset (offset) column in Table 1, the following three cases may exist:

case 1: the PRB offset is set relative to a starting position of the separate initial UL BWP by default;
case 2: the PRB offset is set relative to an ending position of the separate initial UL BWP by default; and

case 3: whether the PRB offset is set relative to a starting position of the separate initial UL BWP or an ending position of the separate initial UL BWP by default is configured by the network-side device.

The starting position of the separate initial UL BWP can be referred to as a lower PRB index or a PRB lower index. The ending position of the separate initial UL BWP can be referred to as a higher PRB index or a PRB higher index.

(II) A PRB offset configured by the network-side device through higher-layer signaling.

Due to the fact that PRB offsets corresponding to the PUCCH resource set indexes in the foregoing (I) are usually very limited, for example, the PRB offsets involved in the first table include only 0, 2, 3, and 4, the requirements of the first initial uplink BWP, such as the separate initial UL BWP, may not be met. Therefore, new higher-layer signaling can be introduced for configuration of the second PRB offset, so as to distinguish the second PRB offset from the PRB offsets corresponding to the PUCCH resource set indexes in the foregoing (I). For example, the PRB offset configured through higher-layer signaling in (II) may be denoted as a separate PRB offset.

Optionally, the PRB offset configured through higher-layer signaling in (II) may be an offset relative to a starting position of the first initial uplink BWP or an offset relative to an ending position of the first initial uplink BWP.

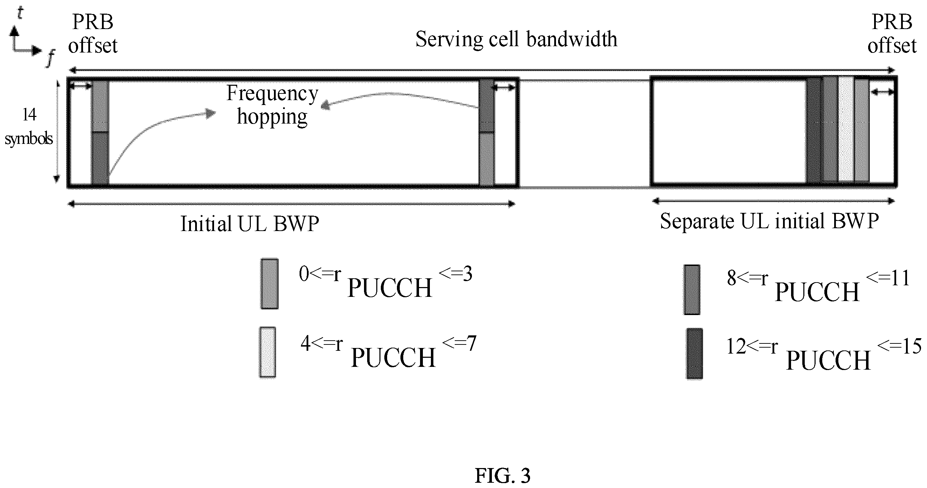

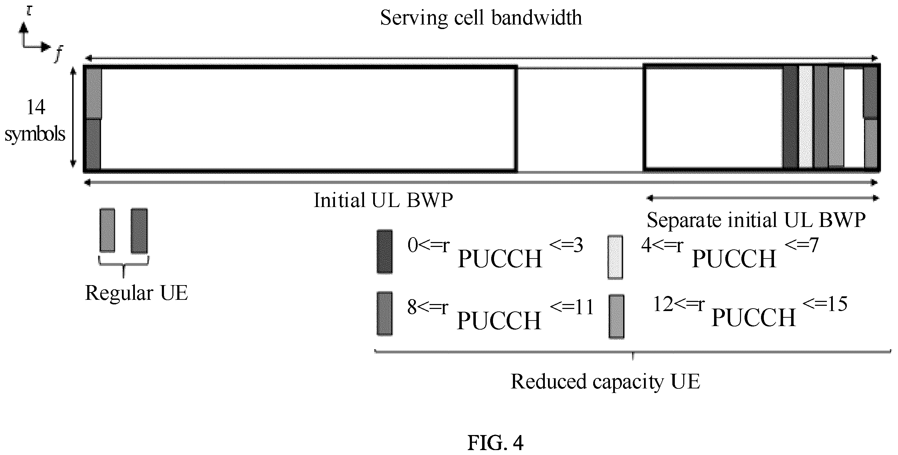

The following describes embodiments of this application with reference to FIG. 3 and FIG. 4.

Embodiment 1

In an example in which RedCap UE is configured with a separate initial UL BWP, the separate initial UL BWP is configured near a carrier edge outside an initial UL BWP configured for non-RedCap UE. Assuming that the RedCap UE determines, based on received SIB1, that its corresponding PUCCH resource set index is 1101, corresponding to index 9 in Table 1 above, the corresponding PRB offset=2, which means that for a random access message such as MSG2 or MSGB, a PRB of a PUCCH in which a HARQ-ACK is fed back has an offset of 2 PRBs with respect to a higher edge of the separate initial UL BWP, as shown in FIG. 3; and $N_{CS} = 4$. The number of PRBs occupied by a PUCCH for MSG4/MSGB feedback is 1, and in the separate initial UL BWP,

(1) for $0 <= r_{PUCCH} <= 3$, a PRB index of a PUCCH occupied is $RB_{BWP}^{offset} + \lfloor r_{PUCCH}/N_{CS} \rfloor = 2 + \lfloor r_{PUCCH}/4 \rfloor = 2$;

(2) for $4 <= r_{PUCCH} <= 7$, a PRB index of a PUCCH occupied is $RB_{BWP}^{offset} + \lfloor r_{PUCCH}/N_{CS} \rfloor = 2 + \lfloor r_{PUCCH}/4 \rfloor = 2 + 1 = 3$;

(3) for $8 <= r_{PUCCH} <= 11$, a PRB index of a PUCCH occupied is $RB_{BWP}^{offset} + \lceil \frac{8}{N_{CS}} \rceil + \lfloor (r_{PUCCH} - 8)/N_{CS} \rfloor = 2 + \lceil \frac{8}{4} \rceil + \lfloor (r_{PUCCH} - 8)/4 \rfloor = 2 + 2 + 0 = 4$ or $RB_{BWP}^{offset} + \lfloor r_{PUCCH}/N_{CS} \rfloor = 2 + 2 = 4$; and

(4) for $12 <= r_{PUCCH} <= 15$, a PRB index of a PUCCH occupied is $RB_{BWP}^{offset} + \lceil \frac{8}{N_{CS}} \rceil + \lfloor (r_{PUCCH} - 8)/N_{CS} \rfloor = 2 + \lceil \frac{8}{4} \rceil + \lfloor (r_{PUCCH} - 8)/4 \rfloor = 2 + 2 + 1 = 5$ or $RB_{BWP}^{offset} + \lfloor r_{PUCCH}/N_{CS} \rfloor = 2 + 3 = 5$.

Embodiment 2

In an example in which RedCap UE is configured with a separate initial UL BWP, the separate initial UL BWP is configured near a carrier edge outside an initial UL BWP configured for non-RedCap UE. Assuming that the RedCap UE determines, based on received SIB1, that its corresponding PUCCH resource set index is 0011, corresponding to index 3 in Table 1 above, the corresponding PRB offset=0, which means that for a random access message such as MSG2 or MSGB, a PRB of a PUCCH in which a HARQ-ACK is fed back has an offset of 0 PRB with respect to a higher edge of the separate initial UL BWP; and $N_{CS} = 2$. The number of PRBs occupied by a PUCCH for MSG4/MSGB feedback is 1, and in the separate initial UL BWP,

(1)   for   $0<=r_{PUCCH}<=1$,   a   PRB   index   of   a   PUCCH   occupied   is   $RB_{BWP}^{offset} +$

$$\lfloor r_{PUCCH}/N_{CS} \rfloor = 0 + \lfloor r_{PUCCH}/2 \rfloor = 0 \ ;$$

(2)   for   $2<=r_{PUCCH}<=3$,   a   PRB   index   of   a   PUCCH   occupied   is   $RB_{BWP}^{offset} +$

$$\lfloor r_{PUCCH}/N_{CS} \rfloor = 0 + \lfloor r_{PUCCH}/2 \rfloor = 0 + 1 = 1 \ ;$$

(3)   for   $4<=r_{PUCCH}<=5$,   a   PRB   index   of   a   PUCCH   occupied   is   $RB_{BWP}^{offset} +$

$$\lfloor r_{PUCCH}/N_{CS} \rfloor = 0 + \lfloor r_{PUCCH}/2 \rfloor = 0 + 2 = 2 \ ;$$

(4)   for   $6<=r_{PUCCH}<=7$,   a   PRB   index   of   a   PUCCH   occupied   is   $RB_{BWP}^{offset} +$

$$\lfloor r_{PUCCH}/N_{CS} \rfloor = 0 + \lfloor r_{PUCCH}/2 \rfloor = 0 + 3 = 3 \ ;$$

(5) for $8<=r_{PUCCH}<=9$, a PRB index of a PUCCH occupied is $RB_{BWP}^{offset} + \lfloor r_{PUCCH}/N_{CS} \rfloor = 0 + 4 = 4$

or $$RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{2} \right\rceil + \lfloor (r_{PUCCH} - 8)/2 \rfloor = 0 + 4 + 0 = 4 \ ;$$

(6) for $10<=r_{PUCCH}<=11$, a PRB index of a PUCCH occupied is $RB_{BWP}^{offset} + \lfloor r_{PUCCH}/N_{CS} \rfloor = 0 + 5 = 5$

or $$RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{2} \right\rceil + \lfloor (r_{PUCCH} - 8)/2 \rfloor = 0 + 4 + 1 = 5 \ ;$$

(7) for $12<=r_{PUCCH}<=13$, a PRB index of a PUCCH occupied is $RB_{BWP}^{offset} + \lfloor r_{PUCCH}/N_{CS} \rfloor = 0 + 6 = 6$

or $$RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{2} \right\rceil + \lfloor (r_{PUCCH} - 8)/2 \rfloor = 0 + 4 + 2 = 6 \ ;$$

and

(8) for $14<=r_{PUCCH}<=15$, a PRB index of a PUCCH occupied is $RB_{BWP}^{offset} + \lfloor r_{PUCCH}/N_{CS} \rfloor = 0 + 7 = 7$

or $$RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{2} \right\rceil + \lfloor (r_{PUCCH} - 8)/2 \rfloor = 0 + 4 + 3 = 7 \ .$$

Embodiment 3

In an example in which a RedCap terminal is configured with a separate initial UL BWP, the separate initial UL BWP is configured near a carrier edge outside an initial UL BWP configured for non-RedCap UE. Assuming that the RedCap terminal determines, based on a received SIB 1, that its corresponding PUCCH resource set index is 0001, corresponding to index 1 in Table 1 above, the corresponding PRB offset=0, which means that for a random access message such as MSG2 or MSGB, a PRB of a PUCCH in which a HARQ-ACK is fed back has an offset of 0 PRB with respect to a higher edge of the separate initial UL BWP, and $N_{CS} = 3$. The number of PRBs occupied by a PUCCH for MSG4/MSGB feedback is 1, and in the separate initial UL BWP,

(1) for $0<=r_{PUCCH}<=2$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0$$ ;

(2) for $3<=r_{PUCCH}<=5$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0 + 1 = 1$$ ;

(3) for $6<=r_{PUCCH}<=8$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0 + 2 = 2$$ ; and for $6<=r_{PUCCH}<=7$, a PRB index of a PUCCH occupied is $RB_{BWP}^{offset} + \lfloor r_{PUCCH}/N_{CS} \rfloor = 0 + \lfloor r_{PUCCH}/3 \rfloor = 0 + 2 = 2$ ;

(4) for $9<=r_{PUCCH}<=11$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0 + 3 = 3$$ ; and for $8<=r_{PUCCH}<=10$, a PRB index of a PUCCH occupied is $RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{3} \right\rceil +$

$$\lfloor (r_{PUCCH} - 8)/3 \rfloor = 0 + 3 + 0 = 3$$ ;

(5) for $12<=r_{PUCCH}<=14$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0 + 4 = 4$$ ; and for $11<= r_{PUCCH} <=13$, a PRB index of a PUCCH occupied is $RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{3} \right\rceil +$

$$\lfloor (r_{PUCCH} - 8)/3 \rfloor = 0 + 3 + 1 = 4$$ ; and

(6) for $r_{PUCCH}=15$, a PRB index of a PUCCH occupied is $RB_{BWP}^{offset} +$

$$\lfloor r_{PUCCH}/N_{CS} \rfloor = 0 + \lfloor r_{PUCCH}/3 \rfloor = 0 + 5 = 5$$ ; and for $14<=r_{PUCCH} <=15$, a PRB index of a PUCCH occupied is $RB_{BWP}^{offset} + \left\lceil \frac{8}{N_{CS}} \right\rceil + \lfloor (r_{PUCCH} - 8)/N_{CS} \rfloor = 0 + \left\lceil \frac{8}{3} \right\rceil +$

$$\lfloor (r_{PUCCH} - 8)/3 \rfloor = 0 + 3 + 2 = 5$$ .

Embodiment 4

In an example in which a RedCap terminal is configured with a separate initial UL BWP, the separate initial UL BWP is configured near a carrier edge within an initial UL BWP configured for non-RedCap UE. Assuming that a non-RedCap terminal determines, based on a received SIB1, that a corresponding $N_{BWP}^{size}$ is 100, its corresponding PUCCH resource set index is determined to be 1100, corresponding to index 12 in Table 1 above, the corresponding PRB offset=0, and $N_{CS} = 4$. For the non-RedCap UE, in the initial UL BWP,

(1) for 0<=r$_{PUCCH}$<=3, a PRB index of a PUCCH in the first hop is

$$RB_{BWP}^{offset} + \lfloor r_{PUCCH}/N_{CS} \rfloor = 0 + \lfloor r_{PUCCH}/4 \rfloor = 0$$ , and a PRB index of the PUCCH in the second hop is

$$N_{BWP}^{size} - 1 - RB_{BWP}^{offset} - \lfloor r_{PUCCH}/N_{CS} \rfloor = 100 - 1 - 0 - \lfloor r_{PUCCH}/4 \rfloor = 99$$ ;

(2) for 4<=r$_{PUCCH}$<=7, a PRB index of a PUCCH in the first hop is

$$RB_{BWP}^{offset} + \lfloor r_{PUCCH}/N_{CS} \rfloor = 0 + \lfloor r_{PUCCH}/4 \rfloor = 0 + 1 = 1$$ , and a PRB index of the PUCCH in the second hop is $$N_{BWP}^{size} - 1 - RB_{BWP}^{offset} - \lfloor r_{PUCCH}/N_{CS} \rfloor = 100 - 1 - 0 - \lfloor r_{PUCCH}/4 \rfloor = 98$$ ;

(3) for 8<=r$_{PUCCH}$<=11, a PRB index of a PUCCH in the first hop is

$$N_{BWP}^{size} - 1 - RB_{BWP}^{offset} - \lfloor (r_{PUCCH} - 8)/N_{CS} \rfloor = 100 - 1 - 0 - 0 = 99$$ , and a PRB index of the PUCCH in the second hop is $$RB_{BWP}^{offset} + \lfloor (r_{PUCCH} - 8)/N_{CS} \rfloor = 0 + 0 = 0$$; and

(4) for 12<=r$_{PUCCH}$<=15, a PRB index of a PUCCH in the first hop is

$$N_{BWP}^{size} - 1 - RB_{BWP}^{offset} - \lfloor (r_{PUCCH} - 8)/N_{CS} \rfloor = 100 - 1 - 0 - 1 = 98$$ , and a PRB index of the PUCCH in the second hop is $$RB_{BWP}^{offset} + \lfloor (r_{PUCCH} - 8)/N_{CS} \rfloor = 0 + 1 = 1.$$

In addition, assuming that the non-RedCap terminal determines, based on the received SIB1, that its corresponding PUCCH resource set index is 1101, corresponding to index 13 in Table 1 above, a corresponding PRB offset=2, and N$_{CS}$ = 4. For the non-RedCap UE, in the initial UL BWP,

(1) for 0<=r$_{PUCCH}$<=3, a PRB index of a PUCCH occupied is $$RB_{BWP}^{offset} + \lfloor r_{PUCCH}/N_{CS} \rfloor = 2 + \lfloor r_{PUCCH}/4 \rfloor = 2$$;

(2) for 4<=r$_{PUCCH}$<=7, a PRB index of a PUCCH occupied is $$RB_{BWP}^{offset} + \lfloor r_{PUCCH}/N_{CS} \rfloor = 2 + \lfloor r_{PUCCH}/4 \rfloor = 2 + 1 = 3$$;

(3) for 8<=r$_{PUCCH}$<=11, a PRB index of a PUCCH occupied is $$RB_{BWP}^{offset} + \left\lceil \frac{8}{N_{CS}} \right\rceil + \lfloor (r_{PUCCH} - 8)/N_{CS} \rfloor = 2 + \left\lceil \frac{8}{4} \right\rceil + \lfloor (r_{PUCCH} - 8)/4 \rfloor = 2 + 2 + 0 = 4$$ or

$$RB_{BWP}^{offset} + \lfloor r_{PUCCH}/N_{CS} \rfloor = 2 + 2 = 4$$; and

(4) for 12<=r$_{PUCCH}$<=15, a PRB index of a PUCCH occupied is $$RB_{BWP}^{offset} + \left\lceil \frac{8}{N_{CS}} \right\rceil + \lfloor (r_{PUCCH} - 8)/N_{CS} \rfloor = 2 + \left\lceil \frac{8}{4} \right\rceil + \lfloor (r_{PUCCH} - 8)/4 \rfloor = 2 + 2 + 1 = 5$$ or

$$RB_{BWP}^{offset} + \lfloor r_{PUCCH}/N_{CS} \rfloor = 2 + 3 = 5.$$

It should be noted that the information determining method provided in this embodiment of this application may be performed by an information determining apparatus or a control module for performing the information determining method in the information determining apparatus. An information determining apparatus provided in an embodiment of this application is described by assuming that the information determining method in this embodiment of this application is performed by the information determining apparatus.

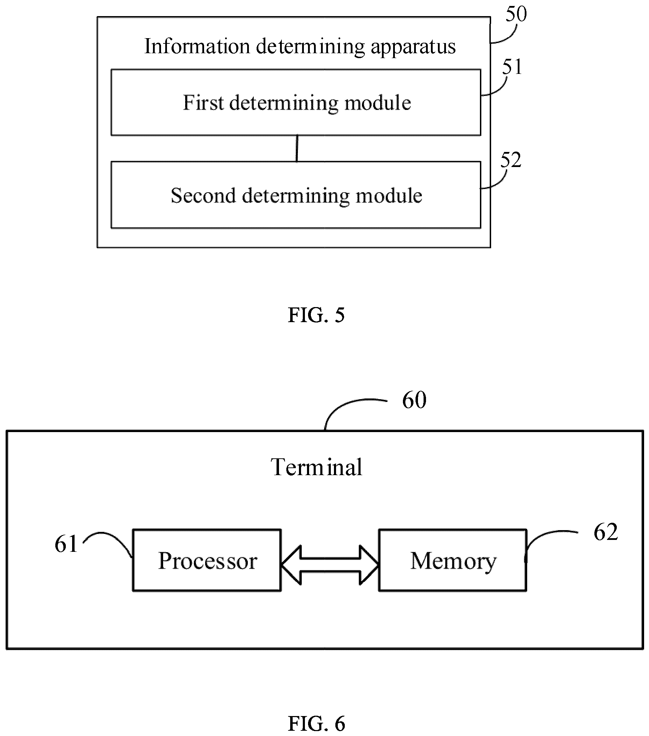

Refer to FIG. 5. FIG. 5 is a schematic structural diagram of an information determining apparatus according to an embodiment of this application. The apparatus is applied to a terminal. As shown in FIG. 5, the information determining apparatus 50 includes:

a first determining module 51 configured to determine a PUCCH resource configured for the terminal on a first initial uplink BWP; and
a second determining module 52 configured to determine a PRB index of the PUCCH resource based on a first PRB offset in a case that frequency hopping of the PUCCH resource is disabled.

Optionally, the first PRB offset includes:

a PRB offset corresponding to a PUCCH resource set index indicated by a network-side device, where the PUCCH resource set index is used to indicate a common PUCCH resource set configured for the terminal; or
a PRB offset configured by the network-side device through higher-layer signaling.

Optionally, the first PRB offset is:

an offset relative to a starting position of the first initial uplink BWP; or
an offset relative to an ending position of the first initial uplink BWP.

Optionally, the first PRB offset being an offset relative to a starting position of the first initial uplink BWP is configured by the network-side device; or the first PRB offset being an offset relative to an ending position of the first initial uplink BWP is configured by the network-side device.

Optionally, the PRB index of the PUCCH resource is $RB_{BWP}^{offset} + \lfloor r_{PUCCH}/N_{CS} \rfloor$; or the PRB index of the PUCCH resource is $N_{BWP}^{size} - 1 - RB_{BWP}^{offset} - \lfloor r_{PUCCH}/N_{CS} \rfloor$; where

$RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \, \rfloor$ represents a round down symbol.

Optionally, when $\lfloor r_{PUCCH}/8 \rfloor = 0$, the PRB index of the PUCCH resource is $RB_{BWP}^{offset} + \lfloor r_{PUCCH}/N_{CS} \rfloor$; or when $\lfloor r_{PUCCH}/8 \rfloor = 1$, the PRB index of the PUCCH resource is $RB_{BWP}^{offset} + X + \lfloor (r_{PUCCH} - 8)/N_{CS} \rfloor$; alternatively, when $\lfloor r_{PUCCH}/8 \rfloor = 0$, the PRB index of the PUCCH resource is $N_{BWP}^{size} - 1 - RB_{BWP}^{offset} - \lfloor r_{PUCCH}/N_{CS} \rfloor$; or when $\lfloor r_{PUCCH}/8 \rfloor = 1$, the PRB index of the PUCCH resource is $N_{BWP}^{size} + X - 1 - RB_{BWP}^{offset} - \lfloor r_{PUCCH}/N_{CS} \rfloor$, where

$RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; X is greater than 0; and $\lfloor \, \rfloor$ represents a round down symbol.

Optionally, X is equal to $\lceil 8/N_{CS} \rceil$, and $\lceil \ \rceil$ represents a round up symbol.

Alternatively, X is a value configured by the network-side device.

Optionally, the second determining module 52 is further configured to:

in a case that frequency hopping is enabled for the PUCCH resource, determine, based on a second PRB offset, a first PRB index of the PUCCH resource in a first hop and a second PRB index of the PUCCH resource in a second hop.

When $\lfloor r_{PUCCH}/8 \rfloor = 0$, the first PRB index is $RB_{BWP}^{offset} + \lfloor r_{PUCCH}/N_{CS} \rfloor$, and the second PRB index is $N_{BWP}^{size} - 1 - RB_{BWP}^{offset} - \lfloor r_{PUCCH}/N_{CS} \rfloor$; or when $\lfloor r_{PUCCH}/8 \rfloor = 1$, the first PRB index is $N_{BWP}^{size} - 1 - RB_{BWP}^{offset} - \lfloor (r_{PUCCH} - 8)/N_{CS} \rfloor$; and the second PRB index is $RB_{BWP}^{offset} + \lfloor (r_{PUCCH} - 8)/N_{CS} \rfloor$; where

$RB_{BWP}^{offset}$ represents the second PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \ \rfloor$ represents a round down symbol.

Optionally, the second PRB offset includes:

a PRB offset corresponding to a PUCCH resource set index indicated by a network-side device, where the PUCCH resource set index is used to indicate a common PUCCH resource set configured for the terminal; or
a PRB offset configured by the network-side device through higher-layer signaling.

Optionally, the second PRB offset is:

an offset relative to a starting position of the first initial uplink BWP; or
an offset relative to an ending position of the first initial uplink BWP.

Optionally, the second PRB offset being an offset relative to a starting position of the first initial uplink BWP is configured by the network-side device; or the second PRB offset being an offset relative to an ending position of the first initial uplink BWP is configured by the network-side device.

Optionally, the terminal is a reduced capability RedCap terminal, and the first initial uplink BWP is a separate initial uplink BWP configured for the reduced capability terminal.

The information determining apparatus 50 in this embodiment of this application may be an apparatus, or an apparatus or electronic device with an operating system, or may be a component, an integrated circuit, or a chip in a terminal. The apparatus or electronic device may be a mobile terminal or a non-mobile terminal. For example, the mobile terminal may include but is not limited to the foregoing illustrated types of terminals 11. The non-mobile terminal may be a server, a network attached storage (Network Attached Storage, NAS), a personal computer (Personal Computer, PC), a television (TeleVision, TV), a teller machine, a self-service machine, or the like. This is not specifically limited in this embodiment of this application.

The information determining apparatus 50 provided in this embodiment of this application can implement the processes implemented by the method embodiment in FIG. 2, with the same technical effects achieved. To avoid repetition, details are not repeated herein.

Optionally, as shown in FIG. 6, an embodiment of this application further provides a terminal 60, including a processor 61, a memory 62, and a program or instructions stored in the memory 62 and capable of running on the processor 61. When the program or instructions are executed by the processor 61, each process of the foregoing information determining method embodiment is implemented, with the same technical effect achieved. To avoid repetition, details are not described herein again.

An embodiment of this application further provides a terminal, including a processor and a communications interface, where the processor is configured to determine a PUCCH resource configured for the terminal on a first initial uplink BWP and determine a PRB index of the PUCCH resource based on a first PRB offset in a case that frequency hopping of the PUCCH resource is disabled. The terminal embodiment can implement the processes in foregoing embodiment of the information determining method, with the same technical effects achieved. To avoid repetition, details are not repeated herein.

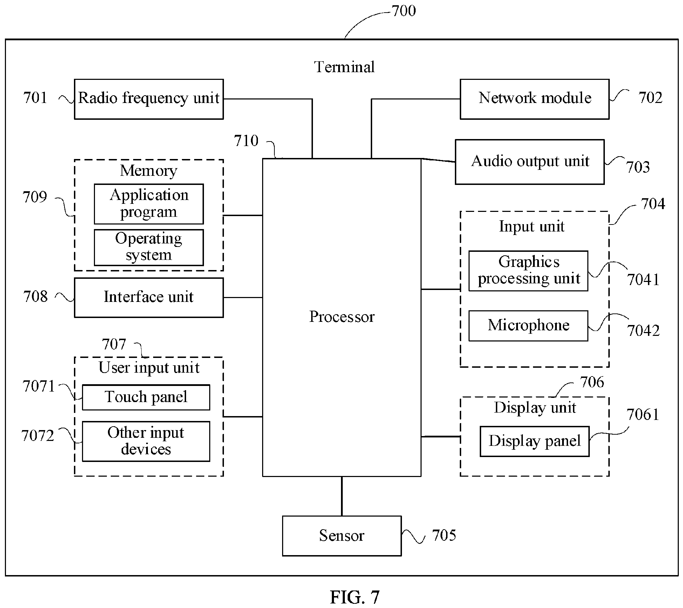

Specifically, FIG. 7 is a schematic diagram of a hardware structure of a terminal implementing embodiments of this application.

The terminal 700 includes but is not limited to at least some of the components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (for example, a battery) that supplies power to various components. The power supply may be logically connected to the processor 710 through a power management system, so that functions such as charge and discharge management and power consumption management are implemented by using the power management system. The terminal is not limited to the terminal structure shown in FIG. 7. The terminal may include more or fewer components than shown in the figure, or combine some of the components, or arrange the components differently. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include the display panel 7061. The display panel 7061 may be configured in a form of a liquid crystal display, an organic light-emitting diode, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (for example, a volume control button or a power button), a trackball, a mouse, and a joystick. Details are not described herein.

In this embodiment of this application, the radio frequency unit 701 sends downlink data received from a network-side device to the processor 710 for processing, and in addition, sends uplink data to the network-side device. Generally, the radio frequency unit 701 includes but is not limited to an antenna, at least one amplifier, a transceiver, a coupler, a low noise amplifier, and a duplexer.

The memory 709 may be configured to store software programs or instructions and various data. The memory 709 may mainly include a program or instructions storage area and a data storage area. The program or instructions storage area may store an operating system, an application program or instructions required by at least one function (for example, an audio play function or an image play function), and the like. In addition, the memory 709 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

Optionally, the processor 710 is configured to determine a PUCCH resource configured for the terminal on a first initial uplink BWP and determine a PRB index of the PUCCH resource based on a first PRB offset in a case that frequency hopping of the PUCCH resource is disabled.

Optionally, the first PRB offset includes:

a PRB offset corresponding to a PUCCH resource set index indicated by a network-side device, where the PUCCH resource set index is used to indicate a common PUCCH resource set configured for the terminal; or
a PRB offset configured by the network-side device through higher-layer signaling.

Optionally, the first PRB offset is:

an offset relative to a starting position of the first initial uplink BWP; or
an offset relative to an ending position of the first initial uplink BWP.

Optionally, the first PRB offset being an offset relative to a starting position of the first initial uplink BWP is configured by the network-side device; or the first PRB offset being an offset relative to an ending position of the first initial uplink BWP is configured by the network-side device.

14

Optionally, the PRB index of the PUCCH resource is $RB_{BWP}^{offset} + \lfloor r_{PUCCH}/N_{CS} \rfloor$ ; or the PRB index of the PUCCH resource is $N_{BWP}^{size} - 1 - RB_{BWP}^{offset} - \lfloor r_{PUCCH}/N_{CS} \rfloor$ ; where $RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \rfloor$ represents a round down symbol.

Optionally, when $\lfloor r_{PUCCH}/8 \rfloor = 0$ , the PRB index of the PUCCH resource is $RB_{BWP}^{offset} + \lfloor r_{PUCCH}/N_{CS} \rfloor$ ; or when $\lfloor r_{PUCCH}/8 \rfloor = 1$ , the PRB index of the PUCCH resource is $RB_{BWP}^{offset} + X + \lfloor (r_{PUCCH} - 8)/N_{CS} \rfloor$ ; alternatively, when $\lfloor r_{PUCCH}/8 \rfloor = 0$ , the PRB index of the PUCCH resource is $N_{BWP}^{size} - 1 - RB_{BWP}^{offset} - \lfloor r_{PUCCH}/N_{CS} \rfloor$ ; or when $\lfloor r_{PUCCH}/8 \rfloor = 1$ , the PRB index of the PUCCH resource is $N_{BWP}^{size} + X - 1 - RB_{BWP}^{offset} - \lfloor r_{PUCCH}/N_{CS} \rfloor$ ; where $RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; X is greater than 0; and $\lfloor \rfloor$ represents a round down symbol.

Optionally, X is equal to $\lceil 8/N_{CS} \rceil$ , and $\lceil \rceil$ represents a round up symbol.

Alternatively, X is a value configured by the network-side device.

Optionally, the processor 710 is further configured to: in a case that frequency hopping is enabled for the PUCCH resource, determine, based on a second PRB offset, a first PRB index of the PUCCH resource in a first hop and a second PRB index of the PUCCH resource in a second hop.

When $\lfloor r_{PUCCH}/8 \rfloor = 0$ , the first PRB index is $RB_{BWP}^{offset} + \lfloor r_{PUCCH}/N_{CS} \rfloor$ , and the second PRB index is $N_{BWP}^{size} - 1 - RB_{BWP}^{offset} - \lfloor r_{PUCCH}/N_{CS} \rfloor$ ; or when $\lfloor r_{PUCCH}/8 \rfloor = 1$ , the first PRB index is $N_{BWP}^{size} - 1 - RB_{BWP}^{offset} - \lfloor (r_{PUCCH} - 8)/N_{CS} \rfloor$ ; and the second PRB index is $RB_{BWP}^{offset} + \lfloor (r_{PUCCH} - 8)/N_{CS} \rfloor$ ; where $RB_{BWP}^{offset}$ represents the second PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \rfloor$ represents a round down symbol.

Optionally, the second PRB offset includes:

a PRB offset corresponding to a PUCCH resource set index indicated by a network-side device, where the PUCCH resource set index is used to indicate a common PUCCH resource set configured for the terminal; or
a PRB offset configured by the network-side device through higher-layer signaling.

Optionally, the second PRB offset is:

an offset relative to a starting position of the first initial uplink BWP; or
an offset relative to an ending position of the first initial uplink BWP.

Optionally, the second PRB offset being an offset relative to a starting position of the first initial uplink BWP is configured by the network-side device; or the second PRB offset being an offset relative to an ending position of the first initial uplink BWP is configured by the network-side device.

Optionally, the terminal 700 is a reduced capability RedCap terminal, and the first initial uplink BWP is a separate initial uplink BWP configured for the reduced capability terminal.

The terminal 700 provided in this embodiment of this application is capable of implementing the processes implemented in the method embodiment shown in FIG. 2, with the same technical effects achieved. To avoid repetition, details are not repeated herein.

An embodiment of this application further provides a readable storage medium, where the readable storage medium has stored a program or instructions thereon, and when the program or instructions are executed by a processor, the processes of the foregoing embodiments of the information determining method are implemented, with the same technical effects achieved. To avoid repetition, details are not repeated herein.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

Another embodiment of this application provides a chip, where the chip includes a processor and a communications interface, the communications interface is coupled to the processor, and the processor is configured to run a program or instructions to implement the processes of the foregoing embodiments of the information determining method, with the same technical effects achieved. To avoid repetition, details are not repeated herein.

It should be understood that the chip mentioned in an embodiment of this application may also be referred to as a system-level chip, a system chip, a chip system, a system-on-chip, or the like.

An embodiment of this application further provides a computer program product, where the computer program product is stored in a non-transitory storage medium. When the computer program product is executed by at least one processor, the processes of the foregoing embodiments of the information determining method are implemented, with the same technical effects achieved. To avoid repetition, details are not repeated herein.

An embodiment of this application further provides a communications device configured to execute the processes of the foregoing embodiments of the information determining method, with the same technical effects achieved. To avoid repetition, details are not repeated herein.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. In the absence of more restrictions, an element preceded by "including a ..." does not preclude another same element in the process, method, article, or apparatus that includes the element. In addition, it should be noted that the scope of the methods and apparatuses in the embodiments of this application is not limited to performing functions in the order shown or discussed, but may further include performing functions at substantially the same time or in reverse order depending on the involved functions. For example, the described method may be performed in an order different from the described order, and steps may be added, omitted, or combined. In addition, features described with reference to some examples may be combined in other examples.

Based on the above description of embodiments, persons skilled in the art can clearly understand that the methods in the foregoing embodiments can be implemented through software on a necessary general hardware platform or certainly through hardware only, but in many cases, the former is the more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An information determining method, comprising:

    determining, by a terminal, a physical uplink control channel PUCCH resource configured for the terminal on a first initial uplink bandwidth part BWP; and
    determining, by the terminal, a physical resource block PRB index of the PUCCH resource based on a first PRB offset in a case that frequency hopping of the PUCCH resource is disabled.

2. The method according to claim 1, wherein the first PRB offset comprises:

    a PRB offset corresponding to a PUCCH resource set index indicated by a network-side device, wherein the PUCCH resource set index is used to indicate a common PUCCH resource set configured for the terminal; or
    a PRB offset configured by the network-side device through higher-layer signaling.

3. The method according to claim 1, wherein the first PRB offset is:

    an offset relative to a starting position of the first initial uplink BWP; or
    an offset relative to an ending position of the first initial uplink BWP.

4. The method according to claim 3, wherein the first PRB offset being an offset relative to a starting position of the first initial uplink BWP is configured by the network-side device; or the first PRB offset being an offset relative to an ending position of the first initial uplink BWP is configured by the network-side device.

5. The method according to claim 1, wherein the PRB index of the PUCCH resource is $RB_{BWP}^{offset} + \lfloor r_{PUCCH}/N_{CS} \rfloor$ ; or the PRB index of the PUCCH resource is $N_{BWP}^{size} - 1 - RB_{BWP}^{offset} - \lfloor r_{PUCCH}/N_{CS} \rfloor$ ; wherein

    $RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \ \rfloor$ represents a round down symbol.

6. The method according to claim 1, wherein when $\lfloor r_{PUCCH}/8 \rfloor = 0$ , the PRB index of the PUCCH resource is $RB_{BWP}^{offset} + \lfloor r_{PUCCH}/N_{CS} \rfloor$ ; or when $\lfloor r_{PUCCH}/8 \rfloor = 1$ , the PRB index of the PUCCH resource is $RB_{BWP}^{offset} + X + \lfloor (r_{PUCCH} - 8)/N_{CS} \rfloor$ ;

    or

    when $\lfloor r_{PUCCH}/8 \rfloor = 0$ , the PRB index of the PUCCH resource is $N_{BWP}^{size} - 1 - RB_{BWP}^{offset} - \lfloor r_{PUCCH}/N_{CS} \rfloor$ ; or when $\lfloor r_{PUCCH}/8 \rfloor = 1$ , the PRB index of the PUCCH resource is $N_{BWP}^{size} + X - 1 - RB_{BWP}^{offset} - \lfloor r_{PUCCH}/N_{CS} \rfloor$ ; wherein

    $RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; X is greater than 0; and $\lfloor \ \rfloor$ represents a round down symbol.

7.

The method according to claim 6, wherein X is equal to $\lceil 8/N_{CS} \rceil$, and $\lceil \ \rceil$ represents a round up symbol;

or

X is a value configured by the network-side device.

8. The method according to claim 1, wherein the method further comprises:

in a case that frequency hopping is enabled for the PUCCH resource, determining, by the terminal based on a second PRB offset, a first PRB index of the PUCCH resource in a first hop and a second PRB index of the PUCCH resource in a second hop; wherein

when $\lfloor r_{PUCCH}/8 \rfloor = 0$, the first PRB index is $RB_{BWP}^{offset} + \lfloor r_{PUCCH}/N_{CS} \rfloor$, and the second PRB index is $N_{BWP}^{size} - 1 - RB_{BWP}^{offset} - \lfloor r_{PUCCH}/N_{CS} \rfloor$; or when $\lfloor r_{PUCCH}/8 \rfloor = 1$, the first PRB index is $N_{BWP}^{size} - 1 - RB_{BWP}^{offset} - \lfloor (r_{PUCCH} - 8)/N_{CS} \rfloor$; and the second PRB index is $RB_{BWP}^{offset} + \lfloor (r_{PUCCH} - 8)/N_{CS} \rfloor$; wherein

$RB_{BWP}^{offset}$ represents the second PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \ \rfloor$ represents a round down symbol.

9. The method according to claim 8, wherein the second PRB offset comprises:

a PRB offset corresponding to a PUCCH resource set index indicated by a network-side device, wherein the PUCCH resource set index is used to indicate a common PUCCH resource set configured for the terminal; or a PRB offset configured by the network-side device through higher-layer signaling.

10. The method according to claim 8, wherein the second PRB offset is:

an offset relative to a starting position of the first initial uplink BWP; or an offset relative to an ending position of the first initial uplink BWP.

11. The method according to any one of claims 1 to 10, wherein the terminal is a reduced capability RedCap terminal, and the first initial uplink BWP is a separate initial uplink BWP configured for the RedCap terminal.

12. An information determining apparatus, comprising:

a first determining module configured to determine a PUCCH resource configured for a terminal on a first initial uplink BWP; and a second determining module configured to determine a PRB index of the PUCCH resource based on a first PRB offset in a case that frequency hopping of the PUCCH resource is disabled.

13. The apparatus according to claim 12, wherein the first PRB offset comprises:

a PRB offset corresponding to a PUCCH resource set index indicated by a network-side device, wherein the PUCCH resource set index is used to indicate a common PUCCH resource set configured for the terminal; or a PRB offset configured by the network-side device through higher-layer signaling.

14. The apparatus according to claim 12, wherein the first PRB offset is:

an offset relative to a starting position of the first initial uplink BWP; or an offset relative to an ending position of the first initial uplink BWP.

15. The apparatus according to claim 14, wherein the first PRB offset being an offset relative to a starting position of the first initial uplink BWP is configured by the network-side device; or the first PRB offset being an offset relative to an ending position of the first initial uplink BWP is configured by the network-side device.

16. The apparatus according to claim 12, wherein the PRB index of the PUCCH resource is $RB_{BWP}^{offset} + \lfloor r_{PUCCH}/N_{CS} \rfloor$; or the PRB index of the PUCCH resource is $N_{BWP}^{size} - 1 - RB_{BWP}^{offset} - \lfloor r_{PUCCH}/N_{CS} \rfloor$; wherein

$RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; and $\lfloor \ \rfloor$ represents a round down symbol.

17. The apparatus according to claim 12, wherein when $\lfloor r_{PUCCH}/8 \rfloor = 0$, the PRB index of the PUCCH resource is $RB_{BWP}^{offset} + \lfloor r_{PUCCH}/N_{CS} \rfloor$; or when $\lfloor r_{PUCCH}/8 \rfloor = 1$, the PRB index of the PUCCH resource is $RB_{BWP}^{offset} + X + \lfloor (r_{PUCCH} - 8)/N_{CS} \rfloor$;

or

when $\lfloor r_{PUCCH}/8 \rfloor = 0$, the PRB index of the PUCCH resource is $N_{BWP}^{size} - 1 - RB_{BWP}^{offset} - \lfloor r_{PUCCH}/N_{CS} \rfloor$; or when $\lfloor r_{PUCCH}/8 \rfloor = 1$, the PRB index of the PUCCH resource is $N_{BWP}^{size} + X - 1 - RB_{BWP}^{offset} - \lfloor r_{PUCCH}/N_{CS} \rfloor$; wherein

$RB_{BWP}^{offset}$ represents the first PRB offset; $N_{BWP}^{size}$ represents a size of the first initial uplink BWP; $r_{PUCCH}$ represents a PUCCH resource index determined by the terminal, $r_{PUCCH}$ being greater than or equal to 0 and less than or equal to 15; $N_{CS}$ represents a total number of initial cyclic shift indexes in a set of initial cyclic shift indexes; X is greater than 0; and $\lfloor \ \rfloor$ represents a round down symbol.

18. The apparatus according to claim 17, wherein X is equal to $\lceil 8/N_{CS} \rceil$, and $\lceil \ \rceil$ represents a round up symbol; or
X is a value configured by the network-side device.

19. The apparatus according to claim 12, wherein the second determining module is further configured to:

in a case that frequency hopping is enabled for the PUCCH resource, determine, based on a second PRB offset, a first PRB index of the PUCCH resource in a first hop and a second PRB index of the PUCCH resource in a second hop; wherein

when $\lfloor r_{PUCCH}/8 \rfloor = 0$, the first PRB index is $RB_{BWP}^{offset} + \lfloor r_{PUCCH}/N_{CS} \rfloor$, and the second PRB index is $N_{BWP}^{size} - 1 - RB_{BWP}^{offset} - \lfloor r_{PUCCH}/N_{CS} \rfloor$; or when $\lfloor r_{PUCCH}/8 \rfloor = 1$, the first PRB index is $N_{BWP}^{size} - 1 - RB_{BWP}^{offset} - \lfloor (r_{PUCCH} - 8)/N_{CS} \rfloor$; and the second PRB index is

$$\text{RB}_{\text{BWP}}^{\text{offset}} + \lfloor (r_{\text{PUCCH}} - 8)/N_{\text{CS}} \rfloor$$ ; wherein

$RB_{\text{BWP}}^{\text{offset}}$ represents the second PRB offset; $N_{\text{BWP}}^{\text{size}}$ represents a size of the first initial uplink BWP; $r_{\text{PUCCH}}$ represents a PUCCH resource index determined by the terminal, $r_{\text{PUCCH}}$ being greater than or equal to 0 and less than or equal to 15; $N_{\text{CS}}$ represents a total number of initial cyclic shift indexes in a set of initial cyclic shift indexes; and $\lfloor \ \rfloor$ represents a round down symbol.

20. The apparatus according to claim 19, wherein the second PRB offset comprises:

a PRB offset corresponding to a PUCCH resource set index indicated by a network-side device, wherein the PUCCH resource set index is used to indicate a common PUCCH resource set configured for the terminal; or
a PRB offset configured by the network-side device through higher-layer signaling.

21. The apparatus according to any one of claims 12 to 20, wherein the terminal is a reduced capability RedCap terminal, and the first initial uplink BWP is a separate initial uplink BWP configured for the reduced capability terminal.

22. A terminal, comprising a processor, a memory, and a program or instructions stored in the memory and capable of running on the processor, wherein when the program or instructions are executed by the processor, the steps of the information determining method according to any one of claims 1 to 11 are implemented.

23. A readable storage medium, wherein the readable storage medium has stored a program or instructions thereon, and when the program or instructions are executed by a processor, the steps of the information determining method according to any one of claims 1 to 11 are implemented.

24. A chip, comprising a processor and a communications interface, wherein the communications interface is coupled to the processor, and the processor is configured to run a program or instructions to implement the information determining method according to any one of claims 1 to 11.

25. A computer program product, wherein the computer program product is stored in a non-volatile storage medium, and the computer program product is executed by at least one processor so as to implement the steps of the information determining method according to any one of claims 1 to 11.

26. A communications device configured to implement the steps of the information determining method according to any one of claims 1 to 11.

Network-side device

12

11

11

Terminal

Terminal

FIG. 1

A terminal determines a PUCCH resource configured for the terminal on a first initial uplink BWP

21

The terminal determines a PRB index of the PUCCH resource based on a first PRB offset in a case that frequency hopping of the PUCCH resource is disabled

22

FIG. 2

FIG. 3

EP 4 429 152 A1

Serving cell bandwidth

Initial UL BWP

Separate initial UL BWP

$0 <= \tau$ PUCCH $<=3$
$4 <= \tau$ PUCCH $<=7$
$8 <= \tau$ PUCCH $<=11$
$12 <= \tau$ PUCCH $<=15$

Regular UE

Reduced capacity UE

14 symbols

FIG. 4

50

Information determining apparatus

51

First determining module

52

Second determining module

FIG. 5

60

Terminal

61 Processor ⟺ Memory 62

FIG. 6

FIG. 7

## INTERNATIONAL SEARCH REPORT

| International application No. |
| --- |
| **PCT/CN2022/129472** |

### A. CLASSIFICATION OF SUBJECT MATTER

H04L 5/00(2006.01)i; H04W 72/04(2023.01)i

According to International Patent Classification (IPC) or to both national classification and IPC

### B. FIELDS SEARCHED

Minimum documentation searched (classification system followed by classification symbols)

H04L5/-;H04W72/-

Documentation searched other than minimum documentation to the extent that such documents are included in the fields searched

Electronic data base consulted during the international search (name of data base and, where practicable, search terms used)

CNABS; CNTXT; CNKI: 物理上行控制信道, 带宽部分, 去使能, 禁用, 跳频, 物理资源块, 偏移, 索引; VEN; DWPI; WOTXT; EPTXT; USTXT; 3GPP: physical uplink control channel, pucch, BWP, bandwidth part, disable, forbidden, frequency hopping, PRB, offset, index

### C. DOCUMENTS CONSIDERED TO BE RELEVANT

| Category* | Citation of document, with indication, where appropriate, of the relevant passages | Relevant to claim No. |
| --- | --- | --- |
| PX | SHARP. ""Discussion on reduced maximum UE bandwidth""<br>*3GPP TSG RAN WG1 #107-e R1-2112015*, Vol. , No. , 19 November 2021 (2021-11-19), ISSN: ,<br>text, pages 1-9 | 1-26 |
| PX | XIAOMI. ""Discussion on the remaining issues of reduced UE bandwidth for RedCap""<br>*3GPP TSG RAN WG1 #107-e R1-2111578*, Vol. , No. , 19 November 2021 (2021-11-19), ISSN: ,<br>text, pages 1-8 | 1-26 |
| X | CN 113302868 A (APPLE INC.) 24 August 2021 (2021-08-24)<br>description, paragraphs [0041]-[0393] | 1-26 |
| X | US 2021029731 A1 (INTEL CORPORATION) 28 January 2021 (2021-01-28)<br>description, paragraphs [0026]-[0323] | 1-26 |
| A | CN 114175550 A (APPLE INC.) 11 March 2022 (2022-03-11)<br>entire document | 1-26 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 January 2023** | **19 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/129472** |

**C.    DOCUMENTS CONSIDERED TO BE RELEVANT**

| Category* | Citation of document, with indication, where appropriate, of the relevant passages | Relevant to claim No. |
|---|---|---|
| A | WO 2021001770 A1 (TELEFONAKTIEBOLAGET LM ERICSSON (PUBL)) 07 January 2021 (2021-01-07)<br>        entire document | 1-26 |

EP 4 429 152 A1

**INTERNATIONAL SEARCH REPORT**
**Information on patent family members**

International application No.

**PCT/CN2022/129472**

| Patent document cited in search report | | | Publication date (day/month/year) | Patent family member(s) | | | Publication date (day/month/year) |
|---|---|---|---|---|---|---|---|
| CN | 113302868 | A | 24 August 2021 | WO | 2020146643 | A1 | 16 July 2020 |
| | | | | EP | 3900253 | A1 | 27 October 2021 |
| | | | | US | 2022086824 | A1 | 17 March 2022 |
| US | 2021029731 | A1 | 28 January 2021 | | None | | |
| CN | 114175550 | A | 11 March 2022 | WO | 2020247797 | A1 | 10 December 2020 |
| | | | | US | 2022225428 | A1 | 14 July 2022 |
| WO | 2021001770 | A1 | 07 January 2021 | US | 2022377619 | A1 | 24 November 2022 |
| | | | | CN | 114342530 | A | 12 April 2022 |
| | | | | EP | 3994829 | A1 | 11 May 2022 |

Form PCT/ISA/210 (patent family annex) (January 2015)

## REFERENCES CITED IN THE DESCRIPTION

### Patent documents cited in the description

- CN 202111306433